(19) Europäisches Patentamt
European Patent Office
Office européen des brevets

(11) EP 3 182 188 A1

(12) EUROPEAN PATENT APPLICATION

(43) Date of publication:
21.06.2017 Bulletin 2017/25

(51) Int Cl.:
G02B 13/00 (2006.01)    G02B 27/09 (2006.01)
G09F 9/33 (2006.01)     G08G 1/095 (2006.01)
F21V 5/04 (2006.01)     G02B 19/00 (2006.01)
F21W 111/02 (2006.01)

(21) Application number: 15460126.4

(22) Date of filing: 20.12.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 17.12.2015 PL 41536515

(71) Applicant: Instytut Optyki Stosowanej
03-805 Warszawa (PL)

(72) Inventors:
• Kryszczynski, Tadeusz
01-034 Warszawa (PL)

• Mikucki, Jerzy
01-934 Warszawa (PL)
• Litwin, Dariusz
00-681 Warszawa (PL)
• Czyzewski, Adam
00-132 Warszawa (PL)
• Galas, Jacek
05-092 Lomianki (PL)
• Sitarek, Stefan
05-830 Nadarzyn (PL)

(74) Representative: Woznicki, Jerzy
Patent Attorney
Al. Niepodleglosci 222 kl. A lok. 20
00-663 Warszawa (PL)

(54) **AN OPTICAL SYSTEM FOR A SINGLE PIXEL OF THE VARIABLE-MESSAGE TRAFFIC SIGN**

(57) The optical system comprises a source of light and two plano-convex rod lenses (2, 3) of the same cross-section size at the base, the first of which (3) has a face part in the form of a sharp-angled truncated cone, while the second rod lens (2) is placed in the optical axis between the first rod lens (3) and the source of light in the form of a tri-colour light emitting diode (1), whereby the base of the first rod lens (3) has a spherical convex surface, while the second rod lens (2) has an ellipsoid convex surface from the side of the first rod lens (3).

Fig. 1

**Description**

The subject of the invention is an optical system for a single pixel of the variable-message traffic sign with a boosted light output.

There are currently known variable-message traffic signs with a screen composed of rod lenses. Variable message signs (VMSs) as a source of light use colour or white light emitting diodes (LEDs) installed to the back panel of the board in the axis of the rod lenses. Light from a single pixel of the traffic sign has a fixed, and currently, variable colour.

From patent specification EP 1179219 is known a modular optical system for traffic signs, comprising rod lenses with a convex light-emitting front surface and a set of uniformly spaced diodes. The lenses has a body of square cross-section and a side length equalling the distance between the diodes. Once installed in the front panel, they form a modular screen of the sign.

From patent specification EP 2356374 is known an optical system of an indicator board fitted with rod lenses with a polygon-shaped cross-section, in particular a square, hexagon or octagon that on the equilateral lens base have a circular-outline convex paraboloid part, while its face has a shape of a sharp-angled truncated cone. The source of light is a monochromatic light emitting diode (LED), which makes it impossible to change the colour of light emitted from a pixel, while the paraboloid convex part attenuates the optical efficiency of the lens at the edges of the front part.

From patent specification EP 2475926 is also known a matrix-based light distribution optical system, fitted with light emitting diodes (LEDs) matrix and board panels placed in parallel, internal and external one, forming light beams distributed by light emitting diodes (LEDs). In this solution the smallest structural module of the internal board panel has on its input surface, from the side of diode containing matrix, four aspheric convex surfaces with a paraboloid or revolution-like shaped surface, while the external board panel has an output surface in the form of a spherical concave surface.

The optical systems operating at a low light distribution angle (approximately 30°) used to date, are not suitable for tri-colour light emitting diodes operating at high distribution angles (approximately 120°), because the degree of light utilisation is too low. Better results can be obtained by using optical systems comprising two rod lenses with properly selected parameters.

The purpose of the invention is to build an optical system for distributing light from a single pixel of the variable-message traffic sign showing no drawbacks of the existing solutions.

The optical system for a single pixel of the variable-message traffic sign, containing a source of light and two plano-convex rod lenses with the same cross-section size at the base, the first of which has a face part in the form of a sharp-angled truncated cone shape, according to the invention is characterised in that the second rod lens is placed in the optical axis between the first rod lens and the source of light in the form of a tri-colour light emitting diode, whereby the base of the first rod lens has a spherical convex surface, while the second rod lens has an ellipsoid convex surface from the side of the first rod lens.

The mutually related relationship of rod lens parameters with the focal of the optical lens include: vertex radius of the aspheric surface and the radius of the spherical surface, lens thickness, the diameter of aspheric convex surface part, the diameter of a flat circular surface, the length of square cross-section and the distance from the flat surface to the tri-colour light emitting diode, are selected from the preferable range, in the following way:

- the ratio of vertex radius $R_0$ of the ellipsoid surface of the second rod lens to focal F of the optical system ranges from 0.64 to 0.72, while the ratio of conical curve k of the surface ranges from -0.60 to -0.64;
- the ratio of thickness $L_1$ of the second rod lens within the optical axis to the focal F of the optical system ranges from 1.84 to 2.00;
- the ratio of radius R of the spherical surface of the first rod lens to the focal F of the optical system ranges from 2.0 to 2.4;
- the ratio of thickness $L_3$ of the first rod lens within the optical axis to the focal F of the optical system ranges from 2.4 to 3.0;
- the ratio of distance s from the flat surface of the second rod lens to the lighting surface of the tri-colour light emitting diode to focal F of the optical system ranges from 0.48 to 0.60;
- the ratio of diameter D of the aspheric part convex surface of the second rod lens to focal F of the optical system ranges from 1.75 to 2.15;
- the ratio of diameter d of the flat circular surface of the first rod lens to focal F of the optical system ranges from 0.9 to 1.1;
- the ratio of side length of the square cross-section q of the rod lenses to focal F of the optical system ranges from 1.9 to 2.4;

The use of the tri-colour light emitting diode made it possible to change the colour of light emitted by a pixel providing a possibility to transit to white light as a result of colour mixing. The use of the optical system comprising two rod lenses with given parameters allows the system to operate as a collimator.

The second rod lens with an ellipsoid aspheric surface and a short focal make it possible to obtain a concentration of LED light distribution angle from the entire light emitting surface.

The first rod lens with a spherical surface and a long focal makes it possible to obtain a collimated beam emitted, and at the same time to increase the diameter of the beam.

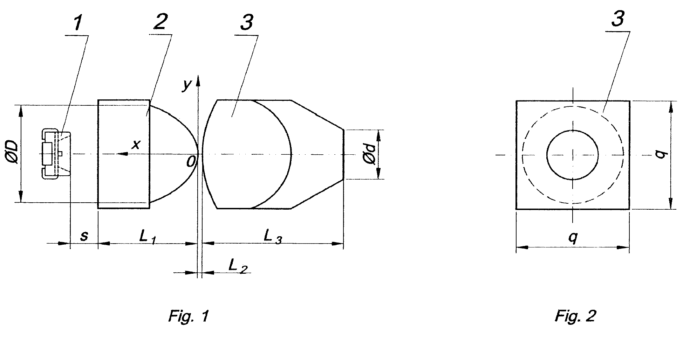

The subject of the invention is shown in an example in the drawing, where Fig. 1 presents the optical system for a single pixel of the variable-message traffic sign in side view, while Fig. 2 - the view of the optical system from Fig. 1 from the side of the first lens flat surface.

The optical system presented in Fig. 1 comprises a source of light in the form tri-colour light emitting diode 1 (LED) and two plano-convex rod lenses 1, 2 featuring identical square cross-section at the base. The first rod lens 3 has its face part in the shape of a sharp-angled truncated cone, while its base has a spherical concave surface. The second rod lens 2 is placed in the optical axis between the first rod lens 3 and the source of light and has an ellipsoid concave surface from the side of the first rod lens 3. The aspheric part of the concave surface of the second rod lens is marked in Fig. 2 with a dashed line.

The dimensions in the figure mean as follows:

s is the distance from the flat surface of the second rod lens 2 to the light surface of tri-colour light emitting diode 1;

D is the diameter of the aspheric part of the concave surface of the second rod lens 2;

$L_1$ is the thickness of the second rod lens 2 in the optical axis;

$L_2$ is the distance between rod lenses 2, 3;

$L_3$ is the thickness of the first rod lens 3 in the optical axis;

d is the diameter of flat circular surface of the first rod lens 3;

q is the length of a side of the square cross-section of rod lenses 2, 3.

The refractive index $n_d$ for the material of both rod lenses 2, 3 equals 1.5277, while its Abbe number is 56.

Focal F of the optical system is 5.58 mm. The vertex radius $R_0$ of the aspheric surface preferably should equal 3.8 mm from the preferable range of vertex radius to the optical system F of the second rod lens 2 ranging from 0.64 to 0.72.

The conic constant k (of an ellipsoid) equals -0.62 from the preferable range of -0.60 to -0.64.

The shape contour of the aspheric surface of the second rod lens 2 provides the following formula:

$$|x| = \frac{y^2}{R_0 \left(1 + \sqrt{1 - (1+k)\left(\frac{y}{R_0}\right)^2}\right)}$$

where: y is a transverse coordinate from the range from 0 to 5.4

x is a longitudinal coordinate

k is a conic constant.

Thickness $L_1$ of the second rod lens 2 in the optical axis is preferably 10.7 mm from the preferable range of thicknesses $L_1$ to focal F of the optical system from 1.84 to 2.0. Thicknesses $L_3$ of the rod lens 3 in the optical axis should preferably equal 15.0 mm from the preferable range of thicknesses $L_3$ to focal F of the optical system from 2.4 to 3.0.

Distance s from the flat surface of the second rod lens 2 to the lighting surface of the tri-colour light emitting diode 1 should preferably equal 3.0 mm from the preferable range of distance s to focal F of the optical system of 0.48 to 0.60.

Diameter D of the aspheric convex surface of the second rod lens 2 is preferably 10.8 mm from the preferable ratios of the diameter D to focal F of the optical system ranging from 1.75 to 2.15.

Diameter d of the flat circular surface of the rod lens 3 should preferably equal 5.5 mm from the preferable ratios of the diameter d to focal F of the optical system ranging from 0.9 to 1.1.

The length of square cross-section side q of the optical system should preferably equal 12.0 mm from the preferable ratios of square side length q to focal F of the optical system ranging from 1.9 to 2.4.

**Claims**

1. An optical system for a single pixel of the variable-message traffic sign, containing a source of light and two plano-convex rod lenses of the same cross-section size at the base, the first of which has a face part in the form of a sharp-angled truncated cone shape, **characterised in that** the second rod lens (2) is placed in the optical axis between the first rod lens (3) and the source of light in the form of a tri-colour light emitting diode (1), whereby the base of the first rod lens (3) has a spherical convex surface, while the second rod lens (2) has an ellipsoid convex surface from the side of the first rod lens (3).

2. The system according to claim 1, wherein the ratio of vertex radius $R_0$ of the ellipsoid surface of the second rod lens (2) to focal F of the optical system ranges from 0.64 to 0.72, while the ratio of conic constant k of the surface ranges from -0.60 to -0.64.

3. The system according to claim 1, wherein the ratio of thickness $L_1$ of the second rod lens (2) within the optical axis to the focal F of the optical system ranges from 1.84 to 2.00.

4. The system according to claim 1, wherein the ratio of radius R of the spherical surface of the first rod lens (3) to the focal F of the optical system ranges from 2.0 to 2.4;

5. The system according to claim 1, **characterised in that** the ratio of thickness $L_3$ of the first rod lens (3) within the optical axis to the focal F of the optical system ranges from 2.4 to 3.0.

6. The system according to claim 1, wherein the ratio of distance s from the flat surface of the second rod lens (2) to the lighting surface of the tri-colour light emitting diode (1) to focal F of the optical system ranges from 0.48 to 0.60.

7. The system according to claim 1, wherein the ratio of diameter D of the aspheric part convex surface of the second rod lens (2) to focal F of the optical system ranges from 1.75 to 2.15.

8. The system according to claim 1, wherein the ratio of diameter d of the flat circular surface of the first rod lens (3) to focal F of the optical system ranges from 0.9 to 1.1.

9. The system according to claim 1, wherein the ratio of side length of the square cross-section q of the rod lenses (3, 2) to focal F of the optical system ranges from 1.9 to 2.4.

*Fig. 1*

*Fig. 2*

Europäisches
Patentamt

European
Patent Office

Office européen
des brevets

# EUROPEAN SEARCH REPORT

**Application Number**

EP 15 46 0126

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 2 475 926 A1 (INST OPTYKI STOSOWANEJ [PL]; INST BADAWCZY DROG I MOSTOW [PL]) 18 July 2012 (2012-07-18) * paragraphs [0008], [0011], [0026], [0027]; figures 6,7 * | 1-9 | INV. G02B13/00 G02B27/09 G09F9/33 G08G1/095 F21V5/04 G02B19/00 |
| A,D | EP 2 356 374 A1 (INST OPTYKI STOSOWANEJ [PL]; INST BADAWCZY DROG I MOSTOW [PL]) 17 August 2011 (2011-08-17) * paragraph [0012] - paragraph [0013]; figures 1,2 * | 1 | ADD. F21W111/02 |
| A | US 2015/325156 A1 (STADJUHAR ROBERT CHARLES [US]) 12 November 2015 (2015-11-12) * paragraphs [0023], [0026], [0042] * | 1 | |
| A | CN 202 306 120 U (SHENZHEN GLORY SKY OPTOELECTRONIC CO LTD) 4 July 2012 (2012-07-04) * paragraph [0023] * | 1 | TECHNICAL FIELDS SEARCHED (IPC) |
| A | US 2006/077661 A1 (ESCHBACH BERND [DE]) 13 April 2006 (2006-04-13) * paragraph [0024] - paragraph [0026]; figure 3 * | 1 | G02B G09F G08G F21W F21Y F21V |
| A | US 6 050 707 A (KONDO TOSHIYUKI [JP] ET AL) 18 April 2000 (2000-04-18) * column 3, line 43 - line 53; figure 1 * | 1 | |
| A | CN 101 858 558 A (UNIV BEIHANG) 13 October 2010 (2010-10-13) * paragraph [0026]; figures 3a,3b,3c * | 1 | |
| A | FR 2 989 148 A1 (EFFILUX [FR]) 11 October 2013 (2013-10-11) * page 2, line 73 - line 74; figure 2 * | 1 | |

The present search report has been drawn up for all claims

| Place of search | Date of completion of the search | Examiner |
|---|---|---|
| Munich | 13 April 2016 | Muller, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 46 0126

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2016

| Patent document cited in search report | | Publication date | Patent family member(s) | | Publication date |
|---|---|---|---|---|---|
| EP 2475926 | A1 | 18-07-2012 | EP | 2475926 A1 | 18-07-2012 |
| | | | PL | 216006 B1 | 28-02-2014 |
| | | | UA | 101080 C2 | 25-02-2013 |
| | | | WO | 2011031170 A1 | 17-03-2011 |
| EP 2356374 | A1 | 17-08-2011 | EP | 2356374 A1 | 17-08-2011 |
| | | | PL | 215189 B1 | 29-11-2013 |
| | | | UA | 99969 C2 | 25-10-2012 |
| | | | WO | 2010068127 A1 | 17-06-2010 |
| US 2015325156 | A1 | 12-11-2015 | NONE | | |
| CN 202306120 | U | 04-07-2012 | NONE | | |
| US 2006077661 | A1 | 13-04-2006 | AT | 354152 T | 15-03-2007 |
| | | | BR | PI0504348 A | 09-05-2006 |
| | | | EP | 1643473 A1 | 05-04-2006 |
| | | | US | 2006077661 A1 | 13-04-2006 |
| US 6050707 | A | 18-04-2000 | JP | H104215 A | 06-01-1998 |
| | | | JP | 3076966 B2 | 14-08-2000 |
| | | | US | 6050707 A | 18-04-2000 |
| CN 101858558 | A | 13-10-2010 | NONE | | |
| FR 2989148 | A1 | 11-10-2013 | NONE | | |

EPO FORM P0459

For more details about this annex : see Official Journal of the European Patent Office, No. 12/82

**REFERENCES CITED IN THE DESCRIPTION**

**Patent documents cited in the description**

- EP 1179219 A
- EP 2356374 A
- EP 2475926 A